# EUROPÄISCHE PATENTSCHRIFT

(11) **EP 1 477 873 B1**
(45) Veröffentlichungstag und Bekanntmachung des Hinweises auf die Patenterteilung: **11.09.2013**
(21) Anmeldenummer: 03010592.8
(22) Anmeldetag: 12.05.2003
(51) Int. Cl.: F16K 31/04, G05D 16/20

(54) **Druckregelungssystem**
Pressure control sysytem
Système de régulation de pression

(43) Veröffentlichungstag der Anmeldung: 17.11.2004
(73) Patentinhaber: WIKA Alexander Wiegand GmbH & Co.KG, 63911 Klingenberg/Main (DE)
(72) Erfinder: Rothenbach, Thomas, 63927 Bürgstadt (DE); Lörzel, Wolfgang, 63768 Hösbach (DE); Haussner, Thorsten, 64711 Erbach (DE); Kern, Heiko, 63911 Klingenberg (DE); Wagner, Frank, 63864 Glattbach (DE); Hahn, Günter, Dr., 63897 Miltenberg (DE)
(74) Vertreter: TBK

(56) Entgegenhaltungen:
- EP-A- 0 257 906
- EP-A- 0 449 225
- PATENT ABSTRACTS OF JAPAN vol. 1997, no. 04, 30. April 1997 (1997-04-30) & JP 08 338550 A (TOHOKU ELECTRIC POWER CO INC;MOTOYAMA SEISAKUSHO:KK), 24. Dezember 1996 (1996-12-24)
- PATENT ABSTRACTS OF JAPAN vol. 017, no. 374 (M-1445), 14. Juli 1993 (1993-07-14) & JP 05 060261 A (TRINITY IND CORP), 9. März 1993 (1993-03-09)
- PATENT ABSTRACTS OF JAPAN vol. 1999, no. 03, 31. März 1999 (1999-03-31) & JP 10 318078 A (ABE YUTAKA), 2. Dezember 1998 (1998-12-02)

## Beschreibung

Die Erfindung betrifft ein Druckregelungssystem, und insbesondere ein Präzisions-Druckregelungssystem zur genauen Dosierung von Fluiden zur Druckregelung und/oder Durchflussmengeneinstellung.

Druckregler bzw. Druckregelungssysteme mit Nadelventilen als Stellorgane sind bekannt und dienen zur Bereitstellung eines möglichst konstanten Drucks bzw. eines konstanten Volumenstroms (Durchflussmenge). Neben pneumatischen Verfahren zur Verstellung der Stellorgane werden mit pulsweitenmodulierten Strömen angesteuerte Magnetventile eingesetzt. Diese können beispielsweise als Schwebemagnetventile ohne Ruheposition ausgeführt werden und dienen zur feindosierbaren Steuerung eines Fluidstroms. Derartige Magnetventile sind jedoch im Hinblick auf ihre Verschleißfestigkeit und die Verarbeitung eines möglichst großen Druckbereichs physikalisch begrenzt.

Es werden ferner zur Verstellung der Stellorgane der Nadelventile Antriebseinrichtungen in Verbindung mit Schrittmotoren eingesetzt, wobei jedoch durch diesen Antrieb Ungenauigkeiten bei der Verstellung auftreten und bei dem Aufsetzen der Nadel auf den Ventilsitz ein erheblicher Verschleiß (Verformungen und Abrieb) entsteht.

Im Allgemeinen werden die Ventilnadel und der Nadelventilsitz aus einer Materialkombination von Metallen und Metalloxiden gebildet, die sehr spröde sind. Infolge einer erhöhten Reibung verändern sich Nadel und Ventilsitz insbesondere bei der Steuerung von hohen Drücken und insbesondere dann, wenn auf den Nadelsitz des Nadelventils bei der Verstellung in die Endlage der Nadel sowie zur Abdichtung hoher Drücke hohe Druckkräfte ausgeübt werden. Durch eine erhöhte Reibung und den damit verbundenen Verschleiß ist eine präzise Steuerung der Position der Ventilnadel und ihrer Bewegung nicht dauerhaft gewährleistet.

Im Stand der Technik der EP-A-0 449 225 ist ein Nadelventil beschrieben, das mit einem Kugelumlaufgetriebe versehen ist und über eine Kupplung mit einem Schrittmotor verbunden ist, um den Antrieb durch den Schrittmotor in eine Längsverschiebung der Ventilnadel umzusetzen.

Ferner ist in der JP-08 338 550 AA ein Nadelventil mit einer keramischen Nadel beschrieben, die über ein Stützkissen federnd gehalten ist, um Wärmedehnungsunterschiede von Keramikmaterial und umgebendem Metall auszugleichen.

Die JP-10318078 A zeigt eine Einspritzeinrichtung für dünnflüssige Brennstoffe. Diese Einspritzeinrichtung hat piezokeramische Antriebselemente. Die Einspritzeinrichtung hat ein Nadelventil.

Schließlich ist aus der WO 99/67617 ein Durchflussmesser bekannt, in dem zur Ermittlung eines Volumenstroms einer Flüssigkeit ein Druckverlust über einen mittels einer Ventilnadel verstellbaren Strömungsquerschnitt ermittelt wird.

Der Erfindung liegt daher die Aufgabe zugrunde, ein Druckregelungssystem der eingangs genannten Art derart auszugestalten, dass eine hoch präzise Druckregelung bei geringem Verschleiß des Druckregelungssystems und hoher Lebensdauer gewährleistet ist.

Erfindungsgemäß wird diese Aufgabe mit den in Patentanspruch 1 angegebenen Mitteln gelöst.

Gemäß der vorliegenden Erfindung umfasst das Druckregelungssystem ein Ventil mit einem Ventilkörper, in dem eine Ventilnadel in Längsrichtung bzw. axialer Richtung beweglich angeordnet ist. Mittels einer Vortriebseinrichtung wird die Ventilnadel in der Längsrichtung in Abhängigkeit von der durchzuführenden Steuerungsaufgabe bewegt, wobei die Vortriebseinrichtung mittels einer Antriebseinrichtung angetrieben wird. Die Ventilnadel wird in Richtung eines Ventilsitzes bewegt. Diese Anordnung wirkt als Drosseleinrichtung. Der Ventilsitz und die Ventilnadel sind aus hochfest zähem Keramikmaterial gebildet und die Vortriebseinrichtung ist als Kugelumlaufgetriebe oder -mechanismus ausgeführt.

Durch die Verwendung des Keramikmaterials bei der Ventilnadel und dem Ventilsitz wird die Reibung zwischen Ventilnadel und Ventilsitz erheblich vermindert und es wird ein Abrieb und damit eine über einen längeren Betriebszeitraum eintretende Veränderung der Geometrie der Ventilnadel und des Ventilsitzes vermieden. In Verbindung mit dem hoch präzisen Kugelumlaufmechanismus kann die Ventilnadel sehr genau und spielfrei in beiden Bewegungsrichtungen entsprechend der gewünschten Drosselöffnung positioniert werden. Hierzu wird die Antriebseinrichtung in entsprechender Weise angesteuert.

Hinsichtlich der weiteren Ausgestaltung des erfindungsgemäßen Druckregelungssystems ist die Antriebseinrichtung als ein Schrittmotor ausgestaltet, der in sehr kleinen Schritten ansteuerbar ist. Der Schrittmotor ist über eine Verbindungseinrichtung mit der Vortriebseinrichtung verbunden, wobei das Antriebsdrehmoment der Antriebseinrichtung in Form des Schrittmotors mittels der Verbindungseinrichtung auf die Vortriebseinrichtung übertragen wird.

Die Ventilnadel wird mittels einer Hochdruckdichtung abgedichtet und gleitend geführt, wobei die Hochdruckdichtung eine geringe Reibung auf die Ventilnadel bei ihrer Längsbewegung zum Öffnen oder Schließen der Drosseleinrichtung ausübt, sodass eine präzise Positionierung der Ventilnadel unterstützt wird.

Das Druckregelungssystem umfasst ferner eine Regelungseinrichtung, mit der Drucksensoren zur Erfassung von Druckwerten einer Eingangsseite und einer Ausgangsseite verbunden sind. Ferner können mit Temperatursensoren die Fluidtemperaturen der Eingangs- und Ausgangsseite gemessen werden. Die Erfassungssignale der einzelnen Sensoren werden der Steuerungseinrichtung zugeführt und entsprechend ausgewertet. Es erfolgt eine Temperaturkompensation der erfassten Druckwerte, und zur Regelung eines gewünschten Volumenstroms wird in Abhängigkeit von der auftretenden Regelabweichung eine Stellgröße berechnet und die Antriebseinrichtung durch die Regelungseinrichtung mit einem aus der berechneten Stellgröße abgeleiteten Ansteuerungssignal angesteuert.

In den Unteransprüchen sind vorteilhafte Ausgestaltungen der Erfindung angegeben.

Die vorliegende Erfindung wird nachstehend anhand von Ausführungsbeispielen unter Bezugnahme auf die Zeichnungen näher beschrieben. Es zeigen:
Figur 1 eine Schnittansicht zur Veranschaulichung wesentlicher Teile des Druckregelungssystems gemäß der vorliegenden Erfindung,
Figur 2 ein Blockschaltbild zur Veranschaulichung der Regelungseinrichtung,
Figur 3 zeigt eine Gegenüberstellung von Kennlinien von Regelvorgängen des erfindungsgemäßen Druckregelungssystems und eines bekannten Druckregelungssystems, und
Figur 4 zeigt eine Anwendung des Druckregelungssystems von Fig. 1.

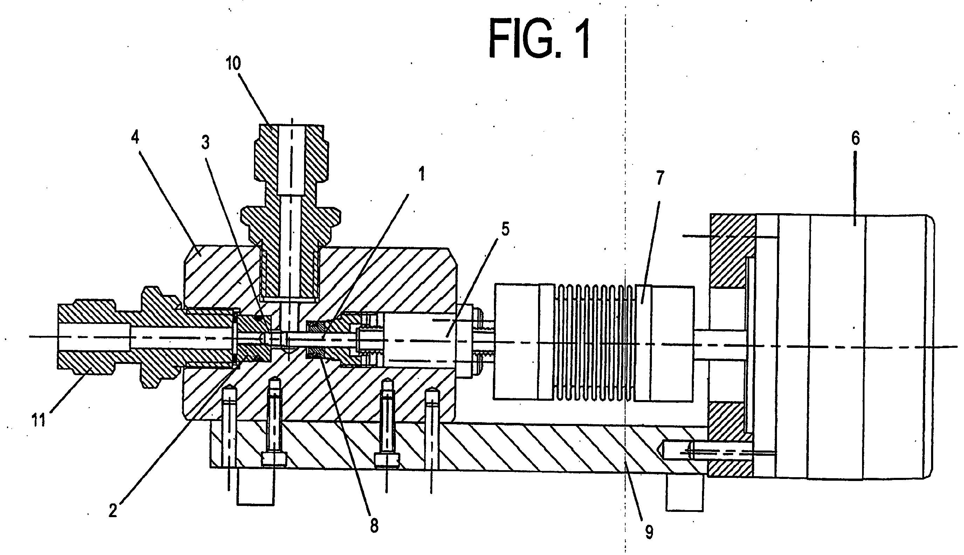

Figur 1 zeigt den grundsätzlichen Aufbau des Druckregelungssystems anhand eines ausgeführten Beispiels.

Das Druckregelungssystem umfasst ein Ventil mit einer Ventilnadel 1, die bei Betätigung des Druckregelungssystems zu einem in einer Drosseleinrichtung 2 angeordneten Ventilsitz 3 bewegbar angeordnet ist. Die Ventilnadel 1 und die Drosseleinrichtung 2 mit dem Ventilsitz 3 sind in einem Ventilkörper 4 angeordnet.

Der Ventilkörper 4 hat eine gestufte Durchgangsbohrung und einen sich im wesentlichen senkrecht dazu erstreckende, in die Durchgangsbohrung öffnende Sackbohrung. In der Durchgangsbohrung sind (von links nach rechts in Fig.1 gesehen) eine Anschlussmimik für die Ausgangsseite (Regelseite), die Drosseleinrichtung 3, die Mündung der Sackbohrung, die Hochdruckdichtung 8 sowie eine Aufnahme für einen Teil der Vortriebseinrichtung 5 ausgebildet. Das äußere Ende der Sackbohrung ist mit einer Anschlussmimik für die Eingangsseite (Druckmediumseingang bei Überdruck) versehen. Um die in der Durchgangsbohrung aufgenommene Ventilnadel 1 wird an der Mündung der Sackbohrung in die Durchgangsbohrung ein Ringraum ausgebildet, von dem das zu regelnde Fluid zur Drosseleinrichtung 2 gelangt.

An dem Ventilkörper 4 ist ferner eine Vortriebseinrichtung 5 angebracht, mittels der die Ventilnadel 1 in ihrer Längsrichtung bzw. in axialer Richtung in Richtung ihres Ventilsitzes 3 der Drosseleinrichtung 2 und von dieser weg bewegt werden kann. Die Ventilnadel 1 wirkt mit dem in der Drosseleinrichtung 2 ausgebildeten Ventilsitz 3 zusammen um eine Drosselöffnung mit ringförmigem Querschnitt zu begrenzen bzw. in Endlage der Ventilnadel 1 dicht zu verschließen.

Eine Antriebseinrichtung 6 (hier beispielsweise ein Schrittmotor) überträgt ihr Drehmoment mittels einer Verbindungseinrichtung 7 oder Kupplung auf die Vortriebseinrichtung 5, sodass bei Betätigung der Vortriebseinrichtung 5 bei Ansteuerung der Antriebseinrichtung 6 die Ventilnadel 1 in Längsrichtung zur Drosseleinrichtung 2 und dem Ventilsitz 3 bewegt bzw. von diesem weitgehend hysteresefrei zurückgezogen werden kann.

Wird die Antriebseinrichtung 6 in der Weise angesteuert, dass das erzeugte Drehmoment über die Verbindungseinrichtung 7 zur Vortriebseinrichtung 5 übertragen wird, dann wird die Ventilnadel 1 beispielsweise in Richtung des Ventilsitzes 3 der Drosseleinrichtung 2 verstellt, wobei eine Verbindung zwischen der Eingangsseite 10 (die in Abhängigkeit von der Wirkrichtung des Drucks, d.h. Überdruck- bzw. Unterdruckregelung einen Druckeinlass bzw. Druckauslass bildet) und der Anschlussmimik 11 für das Regelvolumen (Ausgangsseite) unterbrochen werden kann und das Druckregelungssystem somit geschlossen ist.

Wird die Antriebseinrichtung 6 in umgekehrter Drehrichtung angesteuert, dann wird dieses Drehmoment ebenfalls mittels der Verbindungseinrichtung 7 zur Vortriebseinrichtung 5 übertragen und die Ventilnadel 1 wird von dem Ventilsitz 3 zurückgezogen, sodass eine Verbindung zwischen Eingangsseite 10 und der Ausgangsseite (bei 11) hin zum Regelvolumen freigegeben wird.

In dem Ventilkörper 4 ist ferner zur Abdichtung der beweglich angeordneten Ventilnadel 1 eine Hochdruckdichtung 8 vorgesehen, die die Abdichtung der beweglichen Ventilnadel 1 zur Seite Vortriebseinrichtung 5 bewirkt. Die Materialpaarung von Hochdruckdichtung 8 und Ventilnadel 1 sowie die Anordnung von Ventiladel 1 und Hochdruckdichtung 8 zueinander ist so gewählt, dass die Ventilnadel 1 bei Beginn ihrer Bewegung aus der Ruhelage möglichst geringe Losbrechkräfte und während der Bewegung geringe Reibungskräfte überwinden muss, sodass die Ventilnadel 1 auch aus der Ruhelage sowie im Verlauf der Bewegung ruckfrei bewegt werden kann und die Ventilnadel 1 somit sehr genau positioniert werden kann. Durch die geringe Reibung zwischen der Ventilnadel 1 und der Hochdruckdichtung 8 wird zudem Verschleiß der Ventilnadel 1 bzw. Hochdruckdichtung 8 vermieden und damit eine längere Lebensdauer der Hochdruckdichtung 8 und der Ventilnadel 1 erreicht.

Sowohl die Ventilnadel 1 als auch die Drosseleinrichtung 2 einschließlich des Ventilsitzes 3 bestehen aus einem keramischen Material, das in vorbestimmter Weise hochfeste Eigenschaften aufweist und reibungsarm und restdämpfend wirkt. Durch die hohe formschlüssige passgenaue Kompatibilität des Ventilsitzes 3 und der Ventilnadel 1, können Druckspitzen am Ventilsitz 3 und der Ventilnadel 1 vermieden werden, wenn die Ventilnadel 1 von der Antriebseinrichtung gegen den Ventilsitz 3 gepresst wird. Die Materialelastizität unterstützt ferner die Abdichtwirkung wenn die Ventilnadel 1 zur Abdichtung höherer Drücke nach einer entsprechenden Ansteuerung der Antriebseinrichtung 6 für ein sicheres Schließen des Druckregelungssystems auf den Ventilsitz 3 aufgedrückt wird. Durch die verbesserte Dichtwirkung können die zum sicheren Schließen des Nadelventils erforderlichen Kräfte zudem verringert werden, so dass die Kombination Ventilnadel 1 und Ventilsitz 3 geschont und deren Haltbarkeit verbessert wird. Hierdurch wird eine präzise Positionierung der Ventilnadel 1 als Stellorgan dauerhaft möglich. Die hohe Passgenauigkeit stellt darüber hinaus eine geringe Verkeilneigung sicher.

Die elastische Verformung ermöglicht eine formerhaltende Rückkehr zur Ausgangsgestalt von sowohl der Ventilnadel 1 als auch des Ventilsitzes 3 nach einem kraftvollen Schließen des Ventils, sodass die Gestalt des bei geöffnetem Druckregelungssystem gebildeten Strömungskanals zwischen Ventilnadel 1 und Ventilsitz 3 zur Einstellung eines beabsichtigten Volumenstroms auch nach längerer Betriebsdauer und vielen Arbeitszyklen in Form und Größe erhalten bleibt und somit auch über eine längere Zeit eine gleichbleibende Präzision des einzustellenden Strömungsvolumens gewährleistet ist. Auch bei einem festen Aufsetzen der Ventilnadel 1 auf dem Ventilsitz 3 ergibt sich infolge der Elastizität, Passgenauigkeit, Festigkeit und Reibungsarmut des verwendeten Materials nur ein geringer Abrieb.

Zur Abdichtung speziell hoher Drücke sind der Ventilsitz 3 und die Nadelspitze zu einer Flächendichtung ausgebildet, wobei der Kontakt zwischen Ventilnadel 1 und Ventilsitz 3 eine Anlage auf einer kegelmantelförmigen Fläche ist. Zur sicheren Abdichtung sind der Ventilsitz 3 und die im zugeordnet Nadelfläche mit einer absolut hohen Oberflächengüte gefertigt.

Zur gewünschten präzisen Positionierung der Ventilnadel 1 in dem Ventilkörper 4 in einem vorbestimmten Abstand zu dem Ventilsitz 3 zur Einstellung eines vorbestimmten Strömungsvolumens ist die Antriebseinrichtung 6 beispielsweise in Form eines Schrittmotors vorgesehen, der bezüglich einer großen Anzahl einzustellender (Winkel)Schritte ansteuerbar ist. Somit ermöglicht jeder Verstellschritt des Schrittmotors einen kleinen Verdrehwinkel und eine hohe Auflösung der Drehbewegung des Schrittmotors. Die die Antriebseinrichtung 6 in Form des Schrittmotors mit der Vortriebseinrichtung 5 verbindende Verbindungseinrichtung 7 ist als ein drehsteifer, jedoch in axialer Richtung und bei Winkelversatz zwischen der Antriebseinrichtung 6 und der Vortriebseinrichtung 5 elastischer Verbindungsmechanismus vorgesehen, sodass geringfügige Toleranzen im Winkelversatz und in Längsrichtung (der Verschieberichtung der Ventilnadel 1) ausgeglichen werden können. Im gezeigten Beispiel der Fig.1 ist dies eine Balgkupplung, die biegeweich aber drehsteif ist, um das Drehmoment verlust- bzw. spielfrei übertragen zu können.

Die Verbindungseinrichtung 7 überträgt das Drehmoment der Antriebseinrichtung 6 zu der Vortriebseinrichtung 5, die in Form eines Kugelumlaufgetriebes (Kugelumlaufspindel) vorgesehen ist, um die Drehbewegung der Antriebseinrichtung 6 bzw. des Schrittmotors in eine Längsbewegung zur Verschiebung der Ventilnadel 1 in Richtung ihres Ventilsitzes 3 oder von diesem weg umzuwandeln. Der Kugelumlaufmechanismus oder das Kugelumlaufgetriebe ist mit extrem kleiner Baugröße und mit extrem geringen Toleranzen gefertigt und ermöglicht in Verbindung mit der in vielen Schritten ansteuerbaren Antriebseinrichtung 6 und der reibungsarmen Hochdruckdichtung 8 eine sehr präzise Verstellung und Positionierung der Ventilnadel 1 entsprechend dem gewünschten Strömungsvolumen zwischen der Eingangsseite 10 und der Ausgangsseite 11. Durch die vielen fein aufgelösten Verstellschritte des Schrittmotors der Antriebseinrichtung 6 kann die Ventilnadel 1 präzise dem Ventilsitz 3 in die dichtende Endlage angenähert werden, sodass der Abrieb und damit die Veränderung der Form und Größe der Ventilnadel 1 und des Ventilsitzes 3 sehr gering sind und eine hohe Langzeitstabilität erreicht werden kann. Ferner ermöglicht die Verstellpräzision auch eine hochgenaue Einstellung des von der Ventilnadel 1 freigegebenen Strömungsdurchlasses im Ventil so dass ein fein reproduzierbarer Zusammenhang zwischen Stellung des Schrittmotors und dem eingestellten Strömungsdurchlass besteht. Das Kugelumlaufgetriebe verwendet eine kugelgelagerte Spindel mit einem Rundgewinde mit einer vorbestimmten Steigung sowie eine präzise gefertigte Spindelmutter die über mit engen Toleranzen kalibrierten Kugeln mit der Spindel in Eingriff ist. Dadurch kann die Position der Ventilnadel 1 mit extrem kleinen Toleranzen quasi spielfrei und mit hoher Wiederholgenauigkeit präzise in beiden Bewegungsrichtungen eingestellt werden.

Im Sinne einer kompakten Ausführung des Druckregelungssystems sind sämtliche vorstehend angegebenen Einzelteile des Druckregelungssystems gemäß der Darstellung in Figur 1 vorzugsweise auf einer gemeinsamen Grundplatte 9 angeordnet.

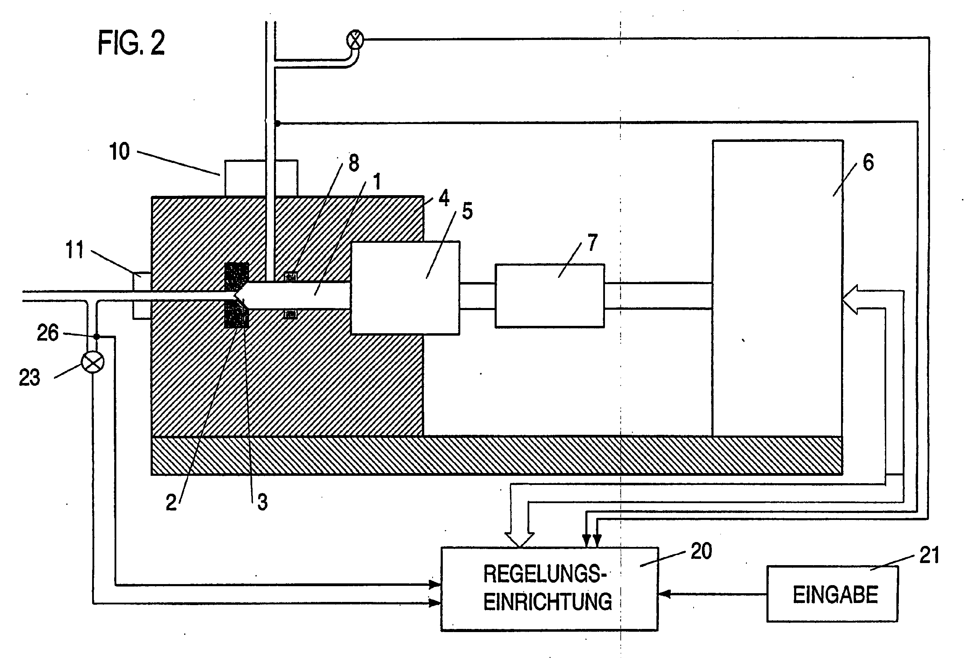

Unter Bezugnahme auf Figur 2 wird nun ein Regelungsvorgang des Druckregelungssystems beschrieben. In Figur 2 sind gleichartige Teile wie in Figur 1 mit denselben Bezugszeichen bezeichnet, sodass eine Beschreibung dieser Teile weggelassen ist.

Das Druckregelungssystem umfasst eine Regeleinrichtung 20, die üblicherweise in Form eines Mikroprozessors oder Mikrocomputers vorgesehen ist, der intern Festwertspeicher zur Speicherung von grundlegenden Daten und Programmen so wie Schreib/Lesespeicher aufweist zur Zwischenspeicherung von Daten und Messwerten, die im Verlauf der Regelung verarbeitet oder gebildet werden. Entsprechende Verarbeitungsprogramme zur Durchführung der Regelung können auch von externen Computern über entsprechende Anschlüsse oder mittels Datenträger eingegeben werden. Es sind entsprechende Schnittstellen vorgesehen.

Eine Eingabeeinrichtung 21 ist mit der Regeleinrichtung 20 verbunden und dient zur Eingabe von Benutzer-spezifischen Daten und zur Überwachung des Druckregelungssystems.

Mit der Regeleinrichtung 20 ist ein Drucksensor 23 zur Erfassung des geregelten Drucks verbunden. Das Ausgangssignal des Drucksensors 23 wird in der elektronischen Regelungseinrichtung 20 zur Verarbeitung entsprechend aufbereitet und insbesondere in digitale Signale umgewandelt.

Zur Temperaturerfassung ist ferner ein Temperatursensor 26 vorgesehen, der am Anschluss des Regelvolumens angeordnet ist. Das Ausgangssignal des Temperatursensors wird der Regelungseinrichtung 20 zugeführt.

Das Ausgangssignal des Drucksensors 23 bildet für den durch die Regelungseinrichtung 20 durchzuführenden Regelungsvorgang den Istwert. Der für die Regelung erforderliche Istwert wird mittels eines hoch präzisen Drucksensors ermittelt, wobei im Allgemeinen ein Frequenzsignal als Basisdruckwert erzeugt und dieses Frequenzsignal zur Durchführung von Berechnungen und zur präzisen Auswertung im Rahmen einer Signalaufbereitung temperaturkompensiert wird. Hierzu wird mittels des Temperatursensors 26 eine Temperaturinformation gewonnen und in der Regelungseinrichtung 20 verarbeitet, sodass beispielsweise unter Verwendung von Kennfeldern oder Wertetabellen oder durch entsprechende Berechnungen eine Temperaturkompensation des Basisdruckwerts durchgeführt werden kann.

Es sind unterschiedliche Sensortypen auch mit anderen Signalarten neben dem Frequenzsignal als Basisdruckwert möglich, sofern eine gleichartige Genauigkeit der Druckmessung vorliegt, da für eine genaue Regelung der Istwert schnell und hoch präzise zur Verfügung stehen muss. Bei der geforderten Regeldynamik des Druckregelungssystems erfolgt die Verarbeitung der Sensorsignale in der Regelungseinrichtung 20 unter Verwendung eines entsprechenden Verarbeitungsprogramms in einem Zeitraster < 100 ms mit einer Wiederholpräzision von beispielsweise 1 : 100 000 des Messbereichs.

Mittels der Eingabeeinrichtung 21 kann der Benutzer für seine Anwendung spezifische Eingaben vornehmen, wobei üblicherweise ein Sollwert vorgegeben werden kann.

Zur Sicherstellung einer schnellen Regelung bei plötzlich auftretenden Änderungen des Istwerts erfolgt während der Messwerterfassung (Druck und Temperatur) des nächsten präzisen Istwerts die Auswertung der zuvor ermittelten Druck- und Temperaturwerte, und es wird entsprechend dem in dem Verarbeitungsprogramm gebildeten Regelungsmodell die erforderliche Stellgröße gerechnet. Das im Verarbeitungsprogramm implementierte Regelungsmodell gewährleisten ein sensibles, überschwingungsfreies Regeln mit einem schnellen Regelungsbeginn (Anregeln) und einer stabilen Annäherung an den Sollwert (Ausregeln des Sollwerts). Der Benutzer muss dabei nur die für ihn entscheidenden Variationsparameter wie das angeschlossene Prüfvolumen und die Versorgungsdruckhöhen angeben. Es ist auch ferner möglich, diese Parameter automatisch mittels der bestehenden Sensoren auch indirekt zu erfassen und in der Regelungseinrichtung 20 zu speichern und zu verarbeiten. Ohne eine Bestimmung dieser änderbaren Parameter ist kein hoch dynamischer überschwingungsfreier Regelungsbeginn (Anregeln) möglich.

Nach der Berechnung der Stellgröße auf der Basis der gemessenen Druck- und Temperaturwerte und insbesondere des Istwerts durch die Regelungseinrichtung 20 wird ein entsprechendes Ansteuerungssignal über eine Leitungsverbindung (Leistungs- und Datenverbindung, Taktleitungen) 24 der Antriebseinrichtung 6 beispielsweise in Form des Schrittmotors zugeführt. Die Regelungseinrichtung 20 kann zu diesem Zweck entsprechende Leistungstreiberstufen aufweisen.

Die vorstehend beschriebene Anordnung des Druckregelungssystems, und insbesondere die Anordnung der Antriebseinrichtung 6, der Verbindungseinrichtung 7, der Vortriebseinrichtung 5 und der Ventilnadel 1 in Verbindung mit dem Ventilsitz 3 gewährleistet eine annähernd spielfreie Bewegung der Ventilnadel 1 in Richtung des Ventilsitzes 3 oder von diesem weg. Hierbei bildet der Kugelumlaufmechanismus der Vortriebseinrichtung 5 eine spielfreie Bewegungsumwandlung zwischen Antriebseinrichtung 6 und zu verstellender Ventilnadel 1. Die reibungsarme Hochdruckdichtung 8 verhindert Spannungen im Antrieb und unterstützt somit die präzise Positionierung der Ventilnadel 1 mittels der Antriebseinrichtung 6 und der Vortriebseinrichtung 5.

Die vorstehend angegebene präzise Vortriebseinrichtung 5 ermöglicht beispielsweise einen Gesamtverstellweg der Ventilnadel 1 von (1 mm mit einer Reproduzierbarkeit von etwa 1 µm in Längsrichtung der Bewegung der Ventilnadel 1. Die vom statischen Druck und der dynamischen Dauerbewegung verursachten Kräfte werden dabei ohne wesentliche Beeinflussung aufgenommen, sodass die gewünschte präzise Positionierung der Ventilnadel 1 relativ zu dem Ventilsitz 3 gewährleistet ist.

Nach der Berechnung der Stellgröße entsprechend dem Regelungsmodell und den erfassten Druck- und Temperaturwerten erfolgt die Einstellung der Ventilnadel 1 nach entsprechender Ansteuerung der Antriebseinrichtung 6 über die Leitungsverbindung 24, sodass über die relative Position der Ventilnadel 1 bezüglich des Ventilsitzes 3 die eigentliche Volumenstromeinstellung bzw. Dosierung des Ventils vorgenommen wird. Der durch die von dem Ventilsitz 3 beabstandete Ventilnadel 1 erzeugte Strömungskanal muss einen ausreichenden Grundquerschnitt aufweisen, damit die maximal erreichbare Spaltöffnung bei maximal angeschlossenem Prüfvolumen die geforderte Dynamik erreichen kann.

Die Voreinstellung des Strömungskanals erfolgt über den Flankenwinkel der Ventilnadel 1. Bei einem im relevanten Bereich wenige Grad großen Flankenwinkel wird beispielsweise bei dem kleinsten Einzelschritt des Schrittmotors von der Antriebseinrichtung 6 der Drosselspalt zwischen Ventilnadel 1 und Ventilsitz 3 entsprechend präzise eingestellt. Hierdurch wird die geforderte Genauigkeit der Volumenstromeinstellung (Dosiergenauigkeit) und damit ebenfalls die Regelgenauigkeit des Druckregelungssystems gewährleistet. Insbesondere kann der Flankenwinkel ≤ 30° sein.

Zum sicheren Ausregeln sämtlicher möglicher Arbeitspunkte des Druckregelungssystems ist es erforderlich, dass die Ventilnadel 1 bei Anliegen an dem Ventilsitz 3 eine ausreichende Abdichtung bewirkt. Dabei darf die Ventilnadel 1 nicht in dem Ventilsitz 3 verkeilt oder durch Verstellkräfte überlastet werden.

Zu diesem Zweck wurde eine flächige Abdichtung eingesetzt, die bei dem vorbestimmten Flankenwinkel mit einer entsprechenden Präzision ausgebildet wird, damit ein Verkeilen der Ventilnadel 1 in dem Ventilsitz 3 ausgeschlossen wird. Durch den Einsatz des vorstehend angegebenen elastischen Keramikmaterials wird eine reibungsarme Oberfläche erzielt. Der präzisions-geschliffene Keramikwerkstoff zur Bildung der Ventilnadel 1 und des Ventilsitzes 3 soll eine ausreichende Restduktilität aufweisen. Andere Werkstoffe mit gleichartigen ähnlichen Eigenschaften können ebenfalls verwendet werden.

Bei der vorstehend angegebenen Flächendichtung zwischen der mit dem vorbestimmten Flankenwinkel ausgeführten Ventilnadel 1 und dem Ventilsitz 3 kann der Ventilsitz 3 bei den in dem Druckregelungssystem einstellbaren Vorschubkräften für die Bewegung der Ventilnadel 1 eine ungünstige harte Annäherung der Ventilnadel 1 an den Ventilsitz 3 ohne Beschädigung überstehen. Es tritt ferner kein Abrieb durch die Restreibung der Oberflächen bei einer Verstellung der Ventilnadel 1 auf.

Die Flächendichtung entsprechend dem gewählten Flankenwinkel der Ventilnadel 1 ist über eine axiale Länge der Ventilnadel 1 von beispielsweise etwa 1 mm vorgesehen und ermöglicht eine ausreichende Abdichtung zwischen der Ventilnadel 1 und dem Ventilsitz 3, wenn die Oberflächenrauheit einem Feinstschliff entspricht.

Der Dichtpunkt, d.h. die Position der Ventilnadel 1 in dem Ventilsitz 3 bei vollständiger Abdichtung, wird an der Antriebseinrichtung 6 und insbesondere in Verbindung mit dem Schrittmotor eingestellt und/oder durch eine Messung der Druckänderungsgeschwindigkeit im Dosierraum bestimmt.

Das vorstehend angegebene Druckregelungssystem kann neben einer Druckregelung vielfältige automatisierbare Volumenstromsteuerungs- bzw. Dosieraufgaben und insbesondere auch bei hohen statischen Drücken (derzeit etwa 400 bar) übernehmen.

Das Druckregelungssystem ist sowohl bei hohen statischen Drücken als auch bei entsprechend hohem Unterdruck in gleicher Weise und mit gleicher Präzision der Verstellung der Ventilnadel 1 bezüglich ihres Ventilsitzes 3 verwendbar.

Das Druckregelungssystem wurde vorstehend in Verbindung mit der Antriebseinrichtung 6 in Form eines Schrittmotors beschrieben, wobei dieser Schrittmotor eine Vielzahl kleiner Verstellschritte und damit eine sehr kleine Vortriebsauflösung in Verbindung mit der Vortriebseinrichtung 5 (Kugelumlaufmechanismus) gewährleistet. Es ist jedoch auch möglich, anstelle des Schrittmotors in Verbindung mit der Vortriebseinrichtung 5 Piezoelemente als Längsantriebseinrichtung einzusetzen, sofern die gleichen Bedingungen hinsichtlich Dynamik, Festigkeit und Vorschubpräzision erfüllt werden können.

Das erfindungsgemäß Druckregelungssystem gemäß der vorstehenden Beschreibung ermöglicht somit ein überschwingungsfreies Anregeln (Hysteresevermeidung bei angeschlossenen Prüflingen) sowie eine harmonische und möglichst schnelle Anregelkurve (≤10 sec von der Anregelung bis zur präzisen Ausregelung). Das Anregeln, d. h. der Beginn der Regelung nach Erfassung einer Regelabweichung erfolgt mit maximaler Ventilöffnung. Es wird sodann ein hoch stabiles Ausregelverhalten bei Annäherung an den Regelungsendwert gewährleistet (≤0.002 % des Regelbereichs) und es wird ein präzises Messergebnis erhalten (≤0.01 % des Regelbereichs). Es erfolgt ein harmonischer, auf einer Exponential-Funktion basierender Bremsvorgang mit adaptiver Störgrößenermittlung und stufenlosem Übergang in eine überschwingungsfreie Ausregelung.

Der harmonische Bremsvorgang ist thermodynamisch günstiger für angeschlossen Prüfeinrichtungen, wie beispielsweise Manometer.

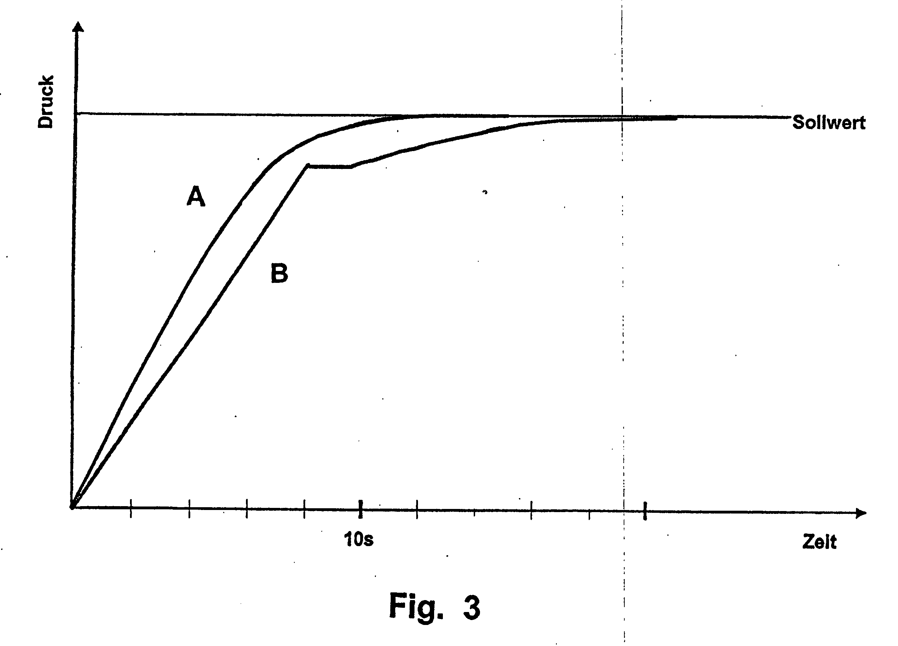

Wie es in Fig. 3 gezeigt ist, kann mittels des erfindungsgemäßen Druckregelungssystems (Kennlinie A) gegenüber bekannten Druckregelungssystemen (Kennlinie B) ein schnelleres Anregeln und ein früheres Erreichen des Regelungsendwerts erzielt werden.

Es sind in Abhängigkeit von den kundenspezifischen Rahmenbedingungen anzuschließende Prüfvolumen von derzeit etwa 10 cm³ bis 1000 cm³ möglich, die mit der erforderlichen Genauigkeit verarbeitet werden können.

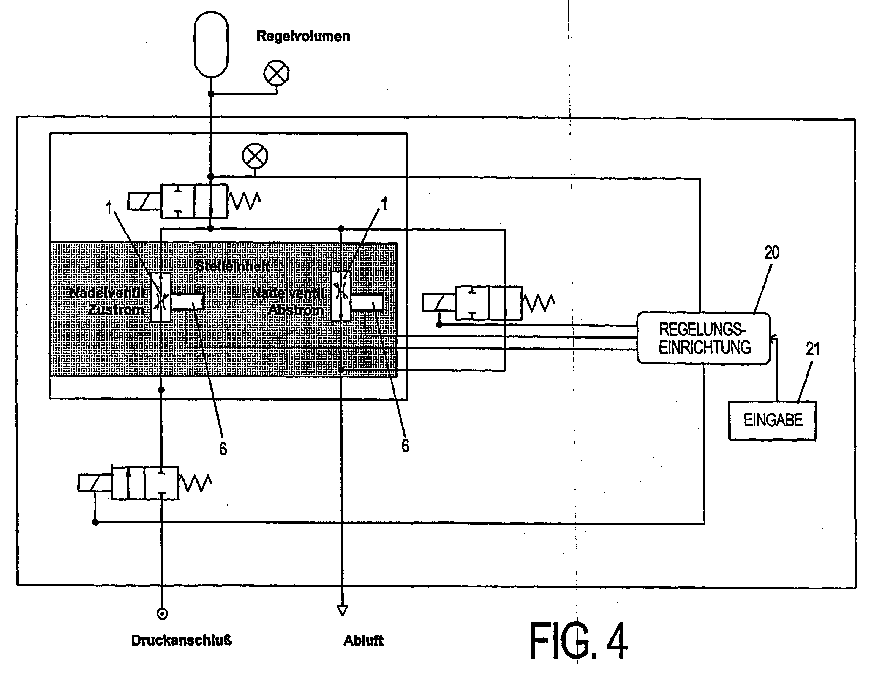

Fig. 4 zeigt eine Anwendung des Druckregelungssystems, wobei eine Stelleinheit aus zwei Druckregelungssystemen besteht und die Regelungseinrichtung 20 für die Zustrom- und Abstromseite die Nadelventile beider Druckregelungssysteme einstellt. Die Regelungseinrichtung 20 ist in dieser Anwendung mit den jeweiligen Antriebseinrichtungen 6 der beiden Druckregelungssysteme verbunden. Es erfolgt eine gemeinsame Messwerterfassung und Messwertauswertung zur Durchführung der Regelung.

Das Druckregelungssystem hat eine der maximalen Durchflußöffnung entsprechende lineare Anfangsanstiegskurve, die naht- und stufenlos übergehend in eine e-funktionale, asymptotisch den Sollwert überschwingungsfrei annähernde Anregelkurve übergeht, wobei trotz Störgrößeneinfluß eine Regelperformance besser als von 100% auf ≤ 0,01% Regelabweichung des Meßbereichs in ≤ 10 Sekunden beispielsweise bei 100 cm³ Meßvolumen erreicht wird.

Das Druckregelungssystem umfasst somit ein Ventil mit einer in einem Ventilkörper 4 beweglich angeordneten Ventilnadel 1, einer Vortriebseinrichtung 5, die in Verbindung mit einem Antrieb durch eine Antriebseinrichtung 6 eine Längsverschiebung der Ventilnadel 1 bewirkt, eine Drosseleinrichtung 2 mit einem Ventilsitz 3, zu dem die Ventilnadel 1 zum Schließen des Druckregelungssystems verschoben und von dem die Ventilnadel 1 zum Öffnen des Druckregelungssystems entfernt wird. Die Ventilnadel 1 und der Ventilsitz 3 bestehen aus einem hochfest zähen, reibungsarmen, Keramikmaterial, und die Vortriebseinrichtung 5 ist als präzises Kugelumlaufgetriebe ausgeführt. Das Druckregelungssystem ermöglicht eine sehr genaue Positionierung der Ventilnadel 1 zur stufenlosen, harmonischen, schnellen, jedoch überschwingungsfreien geregelten Einstellung des Volumenstroms.

## Patentansprüche

1. Druckregelungssystem, mit:
einem Ventil mit einer in einem Ventilkörper (4) beweglich angeordneten Ventilnadel (1),
einer Drosseleinrichtung (2) mit einem Ventilsitz (3), zu dem die Ventilnadel (1) zum Schließen des Druckregelungssystems verschoben und von dem die Ventilnadel (1) zum Öffnen des Druckregelungssystems entfernt wird, und
einem Kugelumlaufgetriebe (5), das über eine Kupplung (7) mit einem Schrittmotor (6) verbunden ist und den Antrieb durch den Schrittmotor (6) in eine Längsverschiebung der Ventilnadel (1) umsetzt,
**dadurch gekennzeichnet, dass**
die Ventilnadel (1) und der Ventilsitz (3) aus hochfest zähem, reibungsarmem Keramikmaterial bestehen, und
die Kupplung eine Balgkupplung ist, die das von dem Schrittmotor (6) erzeugte Drehmoment biegeweich und drehsteif auf das Kugelumlaufgetriebe (5) überträgt, und
eine Regelungseinrichtung (20) vorgesehen ist, um einen Regelungsvorgang auf der Basis eines Istwerts auszuführen wobei das Druckregelungssystem einen Drucksensor (23), zur Messung des Ist-Druckwerts der Druckausgangsseite, und einen Temperatursensor (26) umfasst, und die Regelungseinrichtung dazu eingerichtet ist, einen temperaturkompensierten Druckwert als Istwert zu ermitteln.

2. Druckregelungssystem nach Anspruch 1, wobei die Ventilnadel (1) durch eine Hochdruckdichtung (8) abgedichtet ist, wobei die Materialpaarung eine geringe Reibung auf die Ventilnadel bei der Längsverschiebung ausübt.

3. Druckregelungssystem nach Anspruch 1 oder 2, wobei der Schrittmotor (6) und der Ventilkörper (4) auf einer gemeinsamen Grundplatte (9) angeordnet sind.

4. Druckregelungssystem nach einem der Ansprüche 1 bis 3, wobei die Regelungseinrichtung (20) zur Ansteuerung des Schrittmotors (6) zur Längsverschiebung der Ventilnadel (1) vorgesehen ist.

5. Druckregelungssystem nach einem oder mehreren der vorhergehenden Ansprüche, wobei die Ventilnadel (1) und der Ventilsitz (2) kegelmantelförmige Anlageflächen mit dem kleinen Flankenwinkel (≤ 30°) der Ventilnadel (1) ausgebildet haben, um in dem Ventil in geschlossenem Zustand durch flächige Dichtungsanlage abzudichten, und wobei der durchflussbe-einflussende Gesamtverstellweg der Ventilnadel (1) in dem Ventilkörper (4) vorzugsweise kleiner als 2 mm beträgt.

6. Druckregelungssystem, nach Anspruch 1, mit einer der maximalen Durchflussöffnung entsprechenden linearen Anfangsanstiegskurve, die naht-und stufenlos übergehend in eine e-funktionale, asymptotisch den Sollwert überschwingungsfrei annähernde Anregelkurve übergeht, wobei trotz Störgrößeneinfluss eine Regelperformance besser als von 100 % auf ≤ 0,01% Regelabweichung des Messbereichs in ≤ 10 Sekunden beispielsweise bei 100 cm³ Messvolumen erreicht wird.

## Claims

1. A pressure control system comprising
a valve having a valve needle (1) movably arranged in a valve body (4),
a throttle means (2) having a valve seat (3) towards which the valve needle (1) is shifted for closing the pressure control system and from which the valve needle (1) is removed for opening the pressure control system, and
a ball screw (5) which is connected to a step motor (6) by means of a clutch (7) and transforms the drive by the step motor (6) into a longitudinal shifting of the valve needle (1),
**characterized in that**
the valve needle (1) and the valve seat (3) are composed of high-strength tough friction-poor ceramic material, and
the coupling is a bellows-type coupling for transmitting the torque generated by the step motor (6) in a flexible and torsion-proof manner to the ball screw (5), and
a control means (20) is provided for carrying out a control operation on the basis of an actual value, wherein the pressure control system comprises a pressure sensor (23) for measuring the actual pressure value of the pressure outlet side and a temperature sensor (26), and the control means is adapted to determine a temperature-compensated pressure value as actual value.

2. The pressure control system according to claim 1, wherein the valve needle (1) is sealed off by a high-pressure seal (8), the material combination exerting a low friction onto the valve needle during the longitudinal shifting.

3. The pressure control system according to claim 1 or 2, wherein the step motor (6) and the valve body (4) are arranged on a common base plate (9).

4. The pressure control system according to any one of claims 1 to 3, wherein the control means (20) for driving the step motor (6) is provided for the longitudinal shifting of the valve needle (1).

5. The pressure control system according to one or more of the preceding claims, wherein the valve needle (1) and the valve seat (2) have formed abutting surfaces in the form of a conical shell with the small flank angle (≤ 30°) of the valve needle (1) in order to effect a sealing in the valve in its closed state by surface sealing abutment, and wherein the flow-affecting, overall adjustment travel of the valve needle (1) in the valve body (4) is preferably less than 2 mm.

6. The pressure control system according to claim 1, having a linear initial rising curve corresponding to the maximum flow opening, which smoothly turns into an e-functional control curve asymptotically approaching the target value free from overshoot, wherein, despite a disturbance-value influence, a control performance of better than 100 % for a control deviation of ≤ 0.01 % of the measurement range is reached in ≤ 10 seconds, e.g. with a measurement volume of 100 cm³.

## Revendications

1. Système de régulation de pression, comportant :
une soupape avec un pointeau de soupape (1) mobile dans un corps de soupape (4),
un dispositif d'étranglement (2) avec un siège de soupape (3) vers lequel le pointeau de soupape (1) est translaté pour fermer le système de régulation de pression et dont le pointeau de soupape (1) est retiré pour ouvrir le système de régulation de pression, et
un train épicycloïdal sphérique (5) qui est relié par un accouplement (7) à un moteur pas à pas (6) et qui convertit l'entraînement du moteur pas à pas (6) en un translation longitudinale du pointeau de soupape (1),
**caractérisé en ce que**
le pointeau de soupape (1) et le siège de soupape (3) sont en matériau céramique hautement résistant et à faible friction, et
l'accouplement est un accouplement à soufflet qui transmet au train épicycloïdal sphérique (5) le couple généré par le moteur pas à pas (6), de manière flexible et rigide en rotation, et
il est prévu un dispositif de réglage (20) pour l'exécution d'un processus de réglage sur la base d'une valeur effective,
le système de régulation de pression comprenant un capteur de pression (23) pour mesurer la valeur de pression effective sur le côté de sortie de pression et un capteur de température (26), et le dispositif de réglage étant prévu pour déterminer comme valeur effective une valeur de pression à compensation de température.

2. Système de régulation de pression selon la revendication 1, où le pointeau de soupape (1) est garni d'un joint pour hautes pressions (8), l'association de matériaux exerçant une friction réduite sur le pointeau de soupape lors de la translation longitudinale.

3. Système de régulation de pression selon la revendication 1 ou 2, où le moteur pas à pas (6) et le corps de soupape (4) sont montés sur une plaque de base (9) commune.

4. Système de régulation de pression selon l'une des revendications 1 à 3, où le dispositif de réglage (20) est prévu pour commander le moteur pas à pas (6) pour la translation longitudinale du pointeau de soupape (1).

5. Système de régulation de pression selon l'une ou plusieurs des revendications précédentes, où le pointeau de soupape (1) et le siège de soupape (2) forment des surfaces de butée coniques avec le petit angle de flanc (≤ 30°) du pointeau de soupape (1) pour réaliser une étanchéité par appui de surface d'étanchéité dans la soupape en état de fermeture, et où la course totale de translation du pointeau de soupape (1) permettant le réglage de débit est préférentiellement inférieure à 2 mm dans le corps de soupape (4).

6. Système de régulation de pression selon la revendication 1, présentant une courbe ascendante initiale linéaire correspondant à l'ouverture de débit maximale, laquelle évolue sans rupture et de manière continue vers une courbe de régulation exponentielle qui se rapproche asymptotiquement de la valeur de consigne sans sur-.oscillations, une performance de régulation étant atteinte malgré l'effet d'une grandeur perturbatrice, ladite performance étant supérieure à 100 % pour un écart ≤ 0,01 % de la plage de mesure en 10 secondes ou moins, notamment pour un volume de mesure de 100 cm³.
